# EUROPÄISCHE PATENTANMELDUNG

(11) **EP 0 792 626 A2**
(43) Veröffentlichungstag der Anmeldung: **03.09.1997**
(21) Anmeldenummer: 97103066.3
(22) Anmeldetag: 26.02.1997
(51) Int. Cl.: A61C 13/24

(54) **Zahnprothesensystem**

(30) Priorität: 27.02.1996 AT 356/96
(71) Anmelder: Minatti, Gerhard, 6410 Telfs (AT); Witting, Udo, 6112 Fitzens (AT)
(72) Erfinder: Minatti, Gerhard, 6410 Telfs (AT); Witting, Udo, 6112 Fitzens (AT)
(74) Vertreter: Torggler, Paul Norbert

(57) **Zusammenfassung**

Zahnprothesensystem mit mehreren Zähnen, wobei die Zahnprothese (1, 1') von mindestens einem Luftkanal (4) durchsetzt ist, in dem ein Ventil (3) angeordnet ist. Ein Schlauch (7) führt zu einer Unterdruckpumpe (8).

## Beschreibung

Die Erfindung betrifft ein Zahnprothesensystem mit einer Zahnprothese, die von mindestens einem Luftkanal durchsetzt ist, in dem ein Ventil angeordnet ist.

Bei Zahnprothese, insbesondere Zahnvollprothesen, besteht das Problem, daß diese auf den Kieferkamm bzw. Gaumen des Benutzers nicht gut genug hatten.

Zur Lösung dieses Problems schlägt die Erfindung ein Zahnprothesensystem vor, das gekennzeichnet ist durch ein dicht mit dem Luftkanal bzw. dem darin angeordneten Ventil verbindbares Anschlußstück, von welchem ein Luftschlauch zu einer Einrichtung zum Erzeugen eines Unterdrucks führt. Es ist damit möglich, zwischen der Zahnprothese und dem Untergrund (Kieferkamm und/oder Gaumen) einen verstärkten Unterdruck zu erzeugen und damit den Halt der Prothese, insbesondere beim Essen, zu erhöhen. Der Patient kann den Unterdruck selbst regulieren, damit keine Schleimhautüberlastung entsteht.

Ventile in Zähnen sind bereits bekannt (z. B. DE 37 38 999 A1, DE 40 40 273, US 4,595,364 A). Dort entsteht der Unterdruck durch die Krafteinwirkung beim Kauen, während erfindungsgemäß eine Pumpe oder dgl. vorgesehen ist. Eine platzsparende Unterbringung des Ventils ist dadurch möglich, daß zumindest ein Luftkanal durch einen Zahn verläuft und das Ventil im Zahn angeordnet ist.

Beim erfindungsgemäßen Zahnprothesensystem wird neben der eigentlichen Zahnprothese noch ein Anschlußstück verwendet, das dicht mit dem Luftkanal bzw. dem Ventil verbindbar ist und von dem ein Luftschlauch zu einer Einrichtung zum Erzeugen eines Unterdrucks ("Vakuumpumpe") führt.

Dabei ist es günstig, wenn das in das Ventil einsteckbare Anschlußstück eine Dichtung und einen Anschlag zum Abheben des Ventilkörpers vom Ventilsitz aufweist, wobei die Dichtung den Luftkanal gegen die Umgebungskraft abdichtet, wenn der Anschlag den Ventilkörper vom Ventilsitz abhebt.

Über einen gesonderten Entlastungsstift kann das im unbetätigten Zustand geschlossene Ventil geöffnet werden, um den Unterdruck zwischen Zahnprothese und Untergrund auf das gewünschte Maß abzubauen.

Weitere Vorteile und Einzelheiten der Erfindung werden anhand der nachfolgenden Figurenbeschreibung näher erläutert.

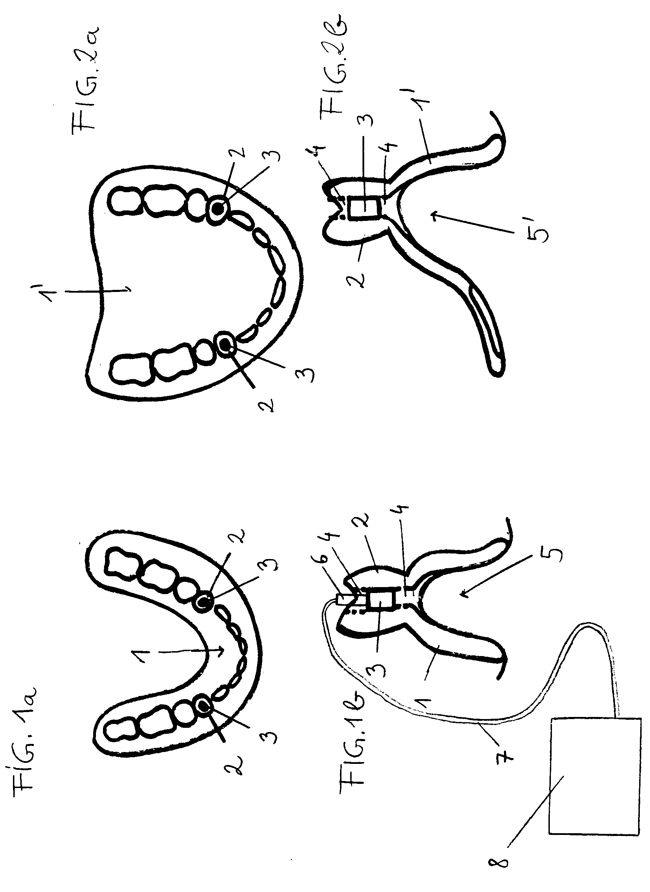

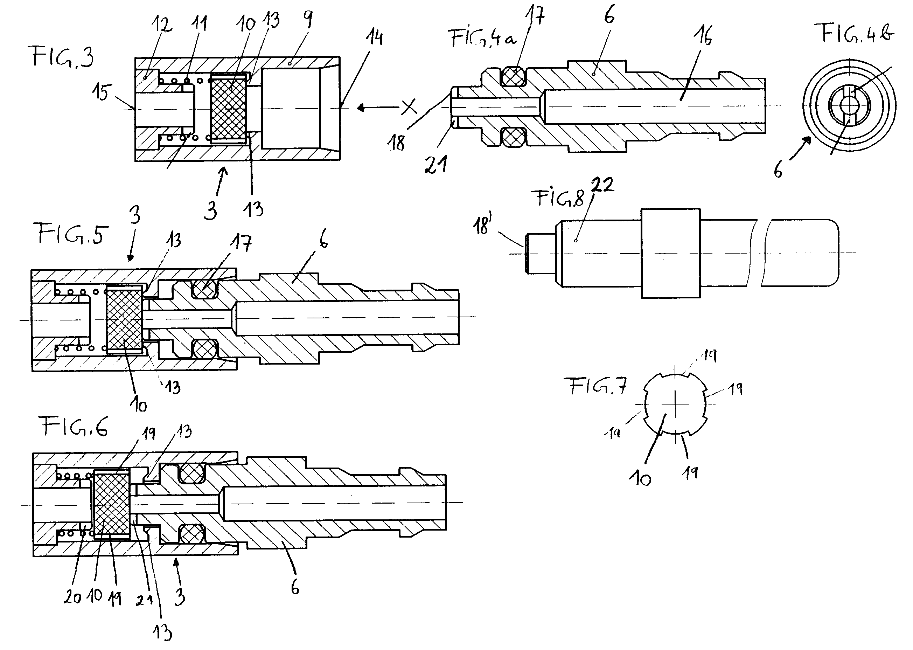

Die Fig. 1a zeigt ein Ausführungsbeispiel einer Zahnprothese in einer Draufsicht (Unterkieferprothese); die Fig. 1b zeigt einen schematischen Schnitt durch einen Zahn, in dem ein Ventil angeordnet ist; die Fig. 2a zeigt eine Oberkieferprothese in einer Unteransicht; die Fig. 2b zeigt einen schematischen Schnitt durch einen Zahn, in dem ein Ventil angeordnet ist; die Fig. 3 zeigt ein Ausführungsbeispiel eines Ventils, das bei der erfindungsgemäßen Zahnprothese zum Einsatz kommen kann; die Fig. 4a zeigt ein Anschlußstück eines erfindungsgemäßen Zahnprothesensystems im Schnitt; die Fig. 4b zeigt dieses Anschlußstück in einer Stirnansicht; die Fig. 5 zeigt das Ventil mit teilweise eingestecktem Anschlußstück in einer Schnittdarstellung; die Fig. 6 zeigt das Ventil mit vollständig eingestecktem Anschlußstück in einer Schnittdarstellung; die Fig. 7 zeigt die Form des Ventilkörpers bei einer Ansicht in Richtung des Pfeiles X der Fig. 3; die Fig. 8 zeigt einen Entlastungsstift zum Abheben des Ventilkörpers vom Ventilsitz.

Die in Fig. 1a und 1b dargestellte Zahnprothese 1 sitzt auf dem Unterkieferkamm 5. In den prämolaren Zähnen 2 ist jeweils ein Ventil 3 eingebaut, mit dem ein durch die Zahnprothese 1 verlaufender Luftkanal 4 absperrbar ist.

Das Ventil 3 ist im unbetätigten Zustand geschlossen und läßt sich durch Einstecken eines Anschlußstückes 6 öffnen. Damit ist es möglich, über einen Luftschlauch 7 und eine Einrichtung zum Erzeugen eines Unterdrucks 8 im Raum zwischen der Prothese 1 und dem Untergrund (Kieferkamm 5) einen Unterdruck zu erzeugen, der die Haftung der Prothese 1 am Untergrund 5 wesentlich verbessert. Nach dem Herausziehen des Anschlußstückes 6 aus dem Ventil 3 bleibt der Unterdruck aufrecht. Die Mündung des Luftkanales 4 auf der Oberseite des Zahnes kann beispielsweise durch einen Schieber abgeschlossen werden.

Die Fig. 2a und 2b zeigen die analoge Situation bei einer Oberkiefer-Zahnprothese 1', die auf dem Oberkieferkamm 5' und dem Gaumen aufsitzt.

Das in Fig. 3 dargestellte Ventil 3 weist einen Ventilkörper 9 auf, in dem ein Ventilkörper 10 verschiebbar gelagert ist. Eine Feder 11 auf dem Federhalter 12 drückt im unbetätigten Zustand der Fig. 3 den Ventilkörper 10 gegen den Ventilsitz 13 und schließt damit das Ventil. Mit der Bezugsziffer 14 ist das mundraumseitige Ende des Ventiles 3 bezeichnet, mit der Bezugsziffer 15 ist das zahnersatzuntergrundseitige Ende des Ventiles 3 bezeichnet. Das Ventil 3 ist fix in den Luftkanal durch den Zahn einer Prothese oder einer sonstigen Stelle in der Zahnprothese eingebaut und erlaubt es, zwischen der Zahnprothese und dem Untergrund einen Unterdruck (Vakuum) aufzubauen und dieses bei Bedarf auch wieder abzubauen.
Zum Aufbau des gewünschten Unterdrucks zwischen der Zahnprothese und dem Untergrund ist ein Anschlußstück 6 in das Ventil einsteckbar. Das Anschlußstück 6 weist gemäß Fig. 4a eine Aufnahme für einen nicht näher dargestellten Luftschlauch auf, der zu einer Vakuumpumpe führt. Weiters weist das Anschlußstück 6 eine ringförmige Dichtung 17 und einen stirnseitigen Anschlag 18 auf, über den der Ventikörper 10 entgegen der Wirkung der Feder 11 vom Ventilsitz 13 abhebbar ist.

Aus Fig. 5 ist ersichtlich, daß die Dichtung 17 beim Einstecken bereits dichtet, bevor der Ventilkörper 10 vom Ventilsitz 13 abgehoben ist. Umgekehrt ist diese Dichtwirkung natürlich auch beim Herausziehen des Anschlußstückes 6 aus dem Ventil 3 gegeben, womit verhindert wird, daß Fremdluft den erzeugten Unterdruck verringert.

Bei der in Fig. 6 dargestellten Stellung ist das Anschlußstück 6 vollständig in das Ventil 3 eingesteckt und damit der Ventilkörper 10 vom Ventilsitz 13 abgehoben. Beim Anschluß einer Saugpumpe kann nun die Luft in Fig. 6 von links nach rechts durch das Ventil ausströmen, und zwar über die Schlitze 20, 19 und 21 in den nichtdargestellten Luftschlauch. Die Fig. 7 zeigt die Anordnung der Schlitze 19 im Ventilkörper 10.

Der in Fig. 8 gezeigte Entlastungsstift 22 weist gegenüber dem Anschlußstück 6 der Fig. 4a einen geringeren Außendurchmesser auf. Mittels des Entlastungsstiftes 22 läßt sich über den Anschlag 18' der Ventilkörper 10 entgegen der Wirkung der Feder 11 vom Ventilsitz 13 abheben, womit der Unterdruck gezielt verringert werden kann. Die geometrische Ausbildung des Entlastungsstiftes ist dabei so gewählt, daß die Luft aus dem Mundraum am Entlastungsstift 22 vorbei in den evakuierten Raum zwischen Zahnprothese und Untergrund strömen kann.

Als Unterdruckpumpen kommen händisch und elektrisch betriebene Pumpen in Frage, wobei die elektrische Variante auch batteriebetrieben sein kann.

## Patentansprüche

1. Zahnprothesensystem mit einer Zahnprothese, die von mindestens einem Luftkanal (4) durchsetzt ist, in dem ein Ventil (3) angeordnet ist, gekennzeichnet durch ein dicht mit dem Luftkanal (4) bzw. dem darin angeordneten Ventil (3) verbindbares Anschlußstück (6), von welchem ein Luftschlauch (7) zu einer Einrichtung (8) zum Erzeugen eines Unterdrucks führt.

2. Zahnprothesensystem nach Anspruch 1, dadurch gekennzeichnet, daß das in das Ventil (3) einsteckbare Anschlußstück (6) eine Dichtung (17) und einen Anschlag (18) zum Abheben des Ventilkörpers (10) vom Ventilsitz (13) aufweist, wobei die Dichtung (17) den Luftkanal (4) gegen die Umgebungskraft abdichtet, wenn der Anschlag (18) den Ventilkörper (10) vom Ventilsitz (13) abhebt.

3. Zahnprothesensystem nach Anspruch 1 oder Anspruch 2, dadurch gekennzeichnet, daß die Einrichtung (8) zum Erzeugen eines Unterdrucks eine händisch oder elektrisch betriebene Pumpe ist.

4. Zahnprothesensystem nach einem der Ansprüche 1 bis 3, gekennzeichnet durch einen gesonderten Entlastungsstift (22), mit welchem das Ventil (3) öffenbar ist.

5. Zahnprothesensystem nach einem der Ansprüche 1 bis 4, dadurch gekennzeichnet, daß zumindest ein Luftkanal (4) durch einen Zahn (2) verläuft und das Ventil (3) im Zahn (2) angeordnet ist.

6. Zahnprothesensystem nach einem der Ansprüche 1 bis 5, dadurch gekennzeichnet, daß das Ventil (3) im unbetätigten Zustand geschlossen ist.

7. Zahnprothesensystem nach Anspruch 6, dadurch gekennzeichnet, daß das Ventil (3) einen durch eine Feder (11) gegen den Ventilsitz (13) gedrückten Ventilkörper (10) aufweist.
